# FASCICULE DE BREVET EUROPEEN

(11) **EP 3 548 381 B1**
(45) Date de publication et mention de la délivrance du brevet: **21.10.2020**
(21) Numéro de dépôt: 17807883.8
(22) Date de dépôt: 01.12.2017
(51) Int. Cl.: B64F 1/12

(54) **PLATEFORME NAVALE ÉQUIPÉE D'UNE ZONE D'APPONTAGE/DÉCOLLAGE ET DE MOYENS DE MANUTENTION D'UN AÉRONEF**
MARINEPLATTFORM MIT EINEM BEREICH FÜR LANDUNG/START AN DECK UND VORRICHTUNG ZUR HANDHABUNG EINES FLUGZEUGS
NAVAL PLATFORM PROVIDED WITH A DECK LANDING/TAKE-OFF ZONE AND MEANS FOR HANDLING AN AIRCRAFT

(30) Priorité: 01.12.2016 FR 1601702
(43) Date de publication de la demande: 09.10.2019
(73) Titulaire: Naval Group, 75015 Paris (FR)
(72) Inventeur: BAURY, Alexandre, 16600 Ruelle sur Touvre (FR); RASPIC, Pierre, 16600 Ruelle sur Touvre (FR); PERILLAUD, Jerôme, 16600 Ruelle sur Touvre (FR)
(74) Mandataire: Lavoix
(86) Numéro de dépôt international: PCT/EP2017/081241
(87) Numéro de publication internationale: WO 2018/100186

(56) Documents cités:
- US-A- 5 098 035

## Description

La présente invention concerne une plateforme navale.

Plus particulièrement, l'invention se rapporte à une plateforme navale équipée d'une zone d'appontage/décollage d'au moins un aéronef.

On trouvera un exemple d'une telle plateforme dans le document US 5 098 035.

De telles plateformes navales sont par exemple constituées par des navires de surface tels que des corvettes, des frégates ou encore des bâtiments de projection voire des porte-aéronefs.

Bien entendu d'autres plateformes telles que par exemple des plateformes pétrolières offshores ou autres, équipées de zones destinées à recevoir des hélicoptères, peuvent également être envisagées.

De façon classique, ces plateformes sont également équipées de moyens en forme de chariot par exemple motorisés de manutention de l'aéronef pour le déplacer sur la plateforme.

Ainsi par exemple, et dans le cas où la plateforme est constituée par un navire tel qu'une corvette ou une frégate, de tels moyens en forme de chariot de manutention sont utilisés pour déplacer par exemple un hélicoptère, entre la zone d'appontage/décollage de la plateforme et un hangar de stockage de celui-ci, prévu à proximité de cette zone dans cette plateforme.

Ces moyens en forme de chariot facilitent les interventions des opérateurs et en particulier facilitent et sécurisent la manutention de charges aussi importantes, telles que par exemple un hélicoptère de plusieurs tonnes.

De nombreux moyens en forme de chariot de manutention ont déjà été proposés pour ce type d'applications dans l'état de la technique.

Ceux-ci comportent de façon générale des moyens de stockage d'énergie, des moyens de motorisation et des moyens d'accouplement à l'aéronef, permettant à un opérateur à travers des moyens de télécommande par exemple, de piloter ces moyens en forme de chariot pour venir saisir l'aéronef et le déplacer.

Mais ces moyens en forme de chariot de manutention présentent un certain nombre d'inconvénients en particulier dans l'application envisagée à bord d'une telle plateforme navale.

En effet et pour différentes raisons opérationnelles, il doit être possible de déplacer l'aéronef et notamment un hélicoptère sur une telle plateforme, par mer formée voire très formée, et par des vents violents.

La plateforme est alors soumise à des mouvements relativement importants, se traduisant par des risques de mouvements/déplacements incontrôlés de l'aéronef sur la plateforme et plus particulièrement sur la zone d'appontage/décollage.

L'aéronef peut en effet subir des efforts provoquant un glissement total ou partiel voire un basculement de celui-ci.

On peut facilement imaginer les répercussions d'une telle perte de contrôle de l'aéronef non seulement pour sa structure et celle de la plateforme mais également pour la sécurité des opérateurs embarqués à bord et en particulier le personnel affecté à la partie aviation de la plateforme.

Un autre problème apparaît au vu de la taille actuelle des zones d'appontage/décollage et des aéronefs destinés à ces plateformes.

En effet les hélicoptères sont de plus en plus gros et les zones ont tendance à se réduire ce qui nécessite de manoeuvrer à de multiples reprises ces aéronefs en appliquant sur les structures de ceux-ci des contraintes de plus en plus importantes et fréquentes.

Or les structures de ces aéronefs n'ont pas toujours été dimensionnées pour supporter de telles manutentions.

De plus, les configurations des zones d'appontage/décollage font qu'il peut être nécessaire d'imprimer des trajectoires courbes très prononcées à ces moyens formant chariot de manutention, pour déplacer l'aéronef entre le hangar et la zone d'appontage/décollage.

Il est également de plus en plus fréquent, que les zones d'appontage/décollage et les hangars soient à des hauteurs différentes et que les moyens de manutention et les aéronefs soient alors amenés à monter ou descendre des portions par exemple en forme de rampe, ce qui n'est pas non plus prévu dans les systèmes antérieurs.

Enfin l'aéronef se pose généralement à des endroits à chaque fois différents et peut même être posé à un endroit de la zone qui soit difficilement accessible en toute sécurité.

Le but de l'invention est donc de résoudre ces problèmes.

A cet effet, l'invention a pour objet une plateforme navale équipée d'une zone d'appontage/décollage d'au moins un aéronef et de moyens de manutention de cet aéronef pour le déplacer sur cette zone d'appontage/décollage, caractérisée en ce que les moyens de manutention comprennent en outre un organe en forme de barre de saisie et de sécurisation du train d'atterrissage principal de l'aéronef muni de moyens en forme de crochet d'ancrage montés déplaçables à coulissement dans au moins un rail de guidage de ses déplacements et donc de l'aéronef sur la zone d'appontage/décollage et en ce que les moyens en forme de crochet sont escamotables pour permettre de libérer l'organe en forme de barre de saisie et de sécurisation, du rail, placer cet organe en position de saisie du train d'atterrissage de l'aéronef, déplacer l'aéronef de manière à amener l'organe en forme de barre de saisie et de sécurisation en position sur ledit au moins un rail et les moyens en forme de crochet en regard de ce rail et remettre ces moyens en forme de crochet en position d'ancrage dans ledit au moins un rail pour sécuriser l'aéronef.

La plateforme selon l'invention peut comprendre l'une ou plusieurs des caractéristiques suivantes, prise(s) isolément ou suivant toute combinaison techniquement possible :
- les moyens en forme de crochet sont montés déplaçables entre des positions active d'ancrage et escamotée de déplacement de l'organe en forme de barre, par l'intermédiaire de moyens de manoeuvre manipulables par un opérateur ;
- les moyens de manoeuvre comprennent un levier déplaçable par un opérateur et sont associés à des moyens d'indication visuelle de la position active ou escamotée des moyens en forme de crochet d'ancrage ;
- les extrémités de l'organe en forme de barre de saisie et de sécurisation comprennent des moyens d'accrochage de premières extrémités de câbles de sécurisation dont les secondes extrémités sont associées à des moyens de manoeuvre pour déplacer et sécuriser l'aéronef sur la plateforme ;
- les moyens de manoeuvre comprennent chacun un motoréducteur associé à un tambour d'enroulement/déroulement du câble et à des poulies de renvoi du câble ;
- elle comporte des moyens de manoeuvre disposés symétriquement de part et d'autre de la zone d'appontage/décollage ;
- la plateforme navale comporte une grille d'harponnage pour l'aéronef dans la zone d'appontage/décollage et un hangar de stockage de cet aéronef ;
- les moyens de manoeuvre sont placés entre la zone d'appontage/décollage et le hangar pour sécuriser les déplacements de l'aéronef entre la zone d'appontage/décollage et ledit au moins un rail ;
- les moyens de manutention comprennent un chariot motorisé de saisie du train d'atterrissage auxiliaire de l'aéronef pour déplacer celui-ci ;
- elle comporte deux rails de guidage parallèles.

L'invention sera mieux comprise à la lecture de la description qui va suivre, donnée uniquement à titre d'exemple et faite en se référant aux dessins annexés, sur lesquels :
- la figure 1 représente une vue partielle en perspective d'un exemple de réalisation d'une plateforme navale selon l'invention, équipée d'une zone d'appontage/décollage d'un aéronef et d'un hangar,
- les figures 2 et 3 représentent des vues de dessus d'une telle zone équipée d'un exemple de réalisation de moyens de manutention d'un aéronef, entrant dans la constitution d'une plateforme selon l'invention,
- la figure 4 représente une vue de dessous d'un aéronef équipé de tels moyens de manutention,
- la figure 5 représente une vue en perspective d'un exemple de réalisation d'un organe en forme de barre de saisie et de sécurisation d'un train d'atterrissage d'un aéronef,
- la figure 6, 7, 8, 9 et 10 illustrent différentes vues de cet organe en forme de barre de saisie et de sécurisation d'un train d'atterrissage et de la zone d'appontage/décollage de la plateforme, et
- la figure 11 représente une vue en perspective d'un exemple de réalisation de moyens de manoeuvre et de mise sous tension de cet organe en forme de barre de saisie et de sécurisation.

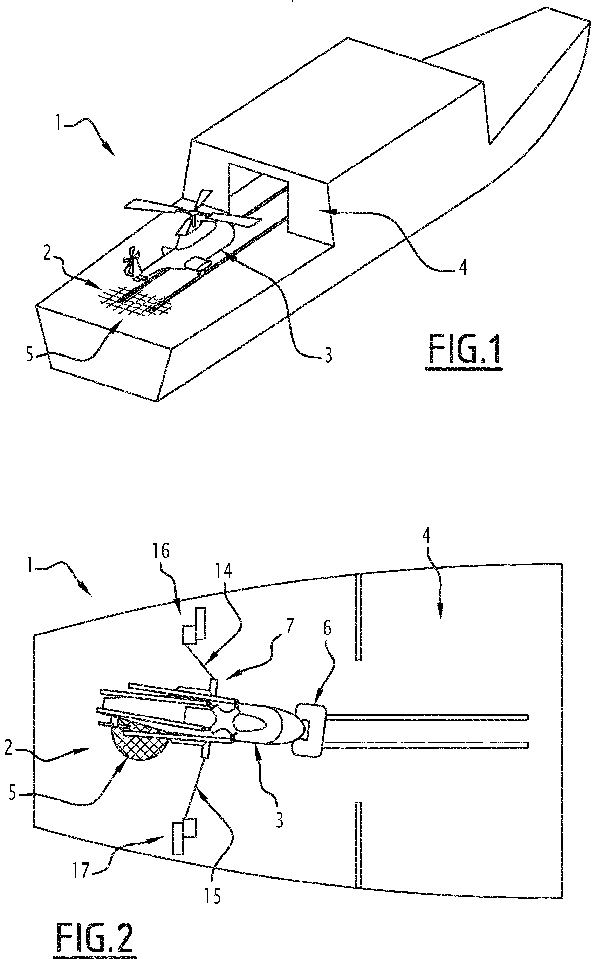

On a en effet illustré sur ces figures et en particulier sur la figure 1, une plateforme navale, qui est désignée par la référence générale 1.

Dans l'exemple de réalisation illustré sur cette figure 1, la plateforme navale 1 est constituée par un bâtiment de surface tel qu'une corvette ou une frégate.

Bien entendu et comme cela a déjà été indiqué précédemment, d'autres exemples de plateformes peuvent être envisagés.

Dans l'exemple décrit, la plateforme navale 1 comporte donc, dans sa partie arrière, une zone d'appontage/décollage, désignée par la référence générale 2, pour un aéronef, désigné par la référence générale 3, constitué, dans l'exemple décrit, par un aéronef à voilure tournante tel qu'un hélicoptère.

D'autres aéronefs peuvent être envisagés.

De même des drones peuvent être envisagés.

La plateforme 1 est également munie, dans l'exemple décrit, d'un hangar 4 de stockage de cet aéronef et par exemple de cet hélicoptère, à proximité de cette zone d'appontage/décollage 2.

On notera également que la zone d'appontage/décollage 2 de la plateforme 1, peut par exemple être équipée de façon connue en soi, d'une grille de harponnage pour l'aéronef 3.

Cette grille de harponnage est désignée par la référence générale 5 sur cette figure 1.

La structure de cette grille 5 et celle des moyens d'harponnage de l'hélicoptère étant bien connues dans l'état de la technique, on ne les décrira pas plus en détails par la suite.

On notera simplement que cette grille 5 est adaptée pour recevoir par exemple, un harpon porté par l'hélicoptère, afin de sécuriser la position de celui-ci sur la plateforme 1 et plus particulièrement au-dessus de cette grille.

Comme cela a été indiqué précédemment, l'hélicoptère doit pouvoir être déplacé facilement et en toute sécurité, entre la zone d'appontage/décollage 2 et le hangar 4 de la plateforme 1.

A cet effet, on utilise des moyens de manutention et de sécurisation de l'aéronef 3 pour le déplacer.

De tels moyens sont en effet mis à la disposition du personnel embarqué et plus particulièrement des opérateurs de la zone aviation de la plateforme, pour les assister lors de ces manoeuvres.

On a illustré sur les figures 2 à 10, un exemple de réalisation et d'implantation de moyens de manutention et de sécurisation d'un tel aéronef sur une zone d'appontage/décollage de cette plateforme.

Sur ces figures, on reconnaît en effet la plateforme navale, qui est toujours désignée par la référence générale 1, la zone d'appontage/décollage de celle-ci, par la référence générale 2, l'aéronef par la référence générale 3, et le hangar par la référence générale 4.

Comme cela est illustré sur ces figures également, un chariot de manutention par exemple motorisé, désigné par la référence générale 6 sur ces figures, est utilisé pour saisir l'aéronef 3 au niveau par exemple de son train d'atterrissage auxiliaire à l'avant de celui-ci.

Ce train d'atterrissage auxiliaire de l'aéronef est par exemple muni de roulettes ou autres.

Ces chariots de manutention motorisés sont déjà bien connus dans l'état de la technique de sorte qu'ils ne seront pas décrits plus en détails par la suite.

On notera simplement que ce chariot de manutention motorisé est par exemple un chariot motorisé équipé de moyens de stockage d'énergie et de moteurs électriques et qui est opéré à distance par exemple par un opérateur, à travers une télécommande, pour permettre de déplacer l'aéronef.

Les moyens de manutention et de sécurisation de l'aéronef comprennent également en outre un organe en forme de barre de saisie et de sécurisation du train d'atterrissage principal de l'aéronef.

Cette barre de saisie et de sécurisation est désignée par la référence générale 7 sur ces figures.

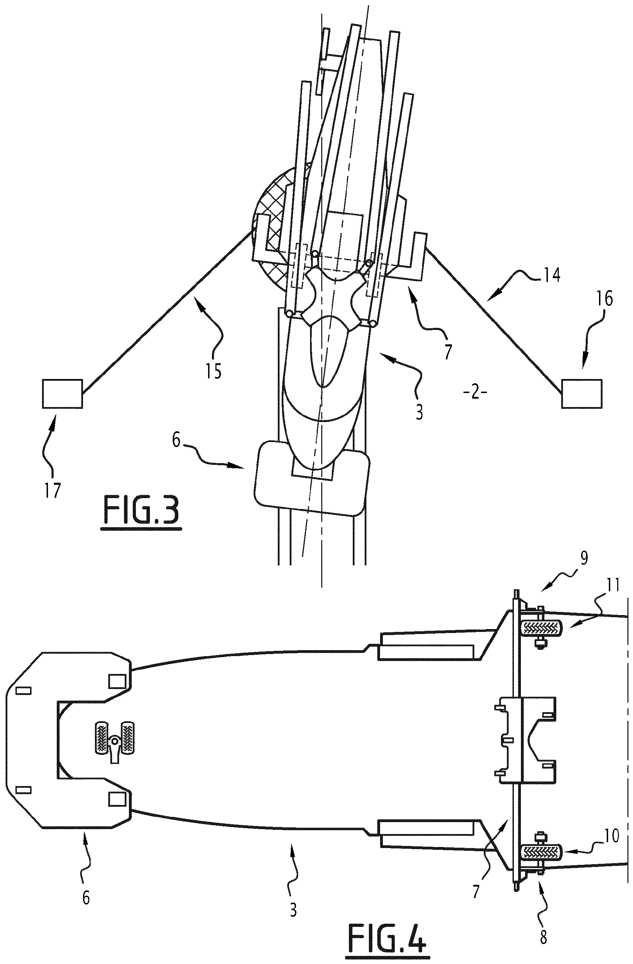

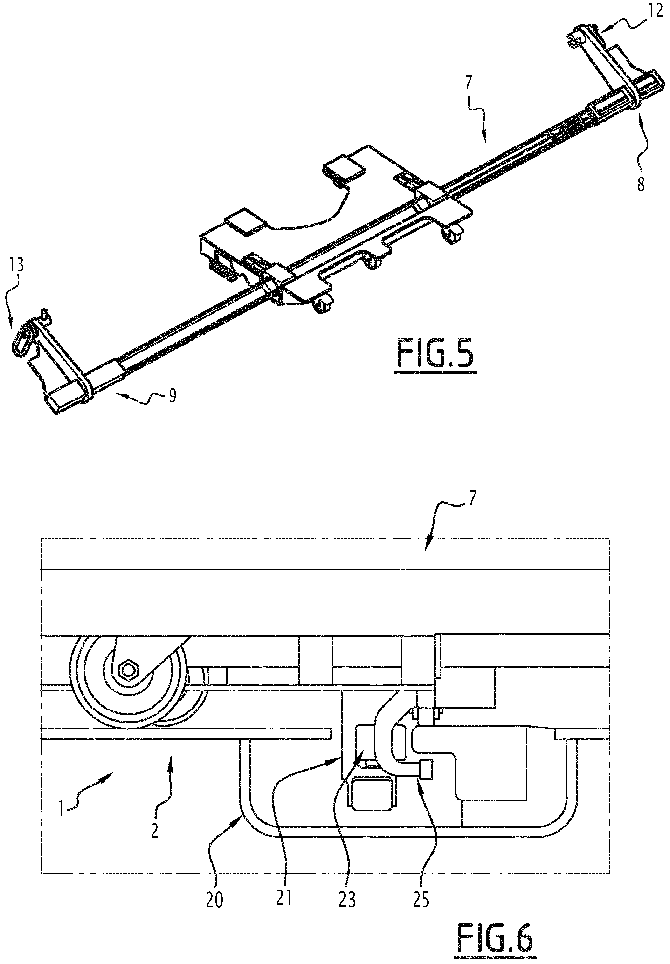

Comme on peut le voir plus clairement sur les figures 4 et 5, cette barre de saisie et de sécurisation 7 comporte à ses extrémités, des moyens, respectivement 8 et 9, d'accouplement ou de saisie des pneumatiques, par exemple 10 et 11 respectivement, du train principal d'atterrissage de l'aéronef 3, afin de saisir ces pneumatiques et de relier la barre de saisie et de sécurisation 7, à l'aéronef 3, à travers son train d'atterrissage principal.

Cet organe 7 en forme de barre de saisie et de sécurisation du train d'atterrissage de l'aéronef, comporte également à ses extrémités, des moyens d'accrochage, respectivement 12 et 13, de premières extrémités de câbles de mise sous tension et de sécurisation de l'aéronef 3, désignés par les références générales 14 et 15, et prévus de part et d'autre de l'aéronef.

Ces moyens de mise sous tension et de sécurisation de l'aéronef s'étendent par exemple symétriquement de part et d'autre de l'axe longitudinal de la zone et de la plateforme.

Les moyens d'accrochage 12 et 13 comprennent n'importe quelle forme de crochets complémentaires par exemple.

Les secondes extrémités de ces câbles de mise sous tension et de sécurisation, 14 et 15, sont quant à elles associées à des moyens de manœuvre et de mise sous tension.

Ces moyens de manoeuvre et de mise sous tension de ces câbles, sont désignés respectivement par les références 16 et 17 sur ces figures et en particulier sur les figures 2 et 3.

Ces moyens de manoeuvre et de mise sous tension de ces câbles seront décrits plus en détail par la suite.

On notera simplement pour l'instant, que ceux-ci comprennent des moyens permettant d'appliquer un effort de traction sur le câble afin et de sécuriser l'aéronef, à travers l'organe en forme de barre de saisie et de sécurisation du train d'atterrissage principal de celui-ci.

Cet organe est en effet associé aux pneumatiques du train d'atterrissage principal de l'aéronef afin de sécuriser les déplacements de celui-ci.

On a illustré de façon plus détaillée sur les figures 4, 5, 6, 7, 8, 9 et 10, un exemple de réalisation de cet organe en forme de barre de saisie et de sécurisation.

Celui-ci est toujours désigné par la référence générale 7 sur ces figures et la plateforme est désignée par la référence générale 1, et de façon plus spécifique, la zone d'appontage/décollage de celui-ci est désignée par la référence générale 2.

En fait et comme cela est illustré sur ces figures, la plateforme comporte entre la zone d'appontage/décollage 2 et par exemple le hangar 4 de stockage de l'aéronef, au moins un rail de guidage et de sécurisation des déplacements de l'organe 7 en forme de barre de saisie et donc de l'aéronef.

En fait et dans l'exemple illustré deux rails parallèles sont représentés.

L'un de ces rails est illustré plus en détails et est désigné par la référence générale 20 sur la figure 6.

Ce rail 20 est alors adapté pour recevoir des moyens de guidage et de reprise d'effort associés à l'organe en forme de barre 7.

Ces moyens de guidage et de reprise d'effort sont désignés par la référence générale 21 sur ces figures.

Ces moyens comportent en effet par exemple des galets de reprise d'effort et de guidage adaptés pour coopérer avec les bords du rail.

Ces galets de guidage et de reprise d'effort sont par exemple désignés par les références 22 et 23 sur ces figures.

De plus, l'organe en forme de barre de saisie 7 comporte également des moyens en forme de crochet d'ancrage qui sont alors déplaçables à coulissement dans le ou les rails de guidage, lors des déplacements de celui-ci et donc de l'aéronef afin de le sécuriser.

Ces moyens en forme de crochet d'ancrage sont désignés par la référence générale 25 sur ces figures.

On voit effectivement que ceux-ci sont donc placés et se déplacent dans le rail 20, afin d'assurer un maintien en position de l'organe 7 et donc de l'aéronef lors de ses déplacements.

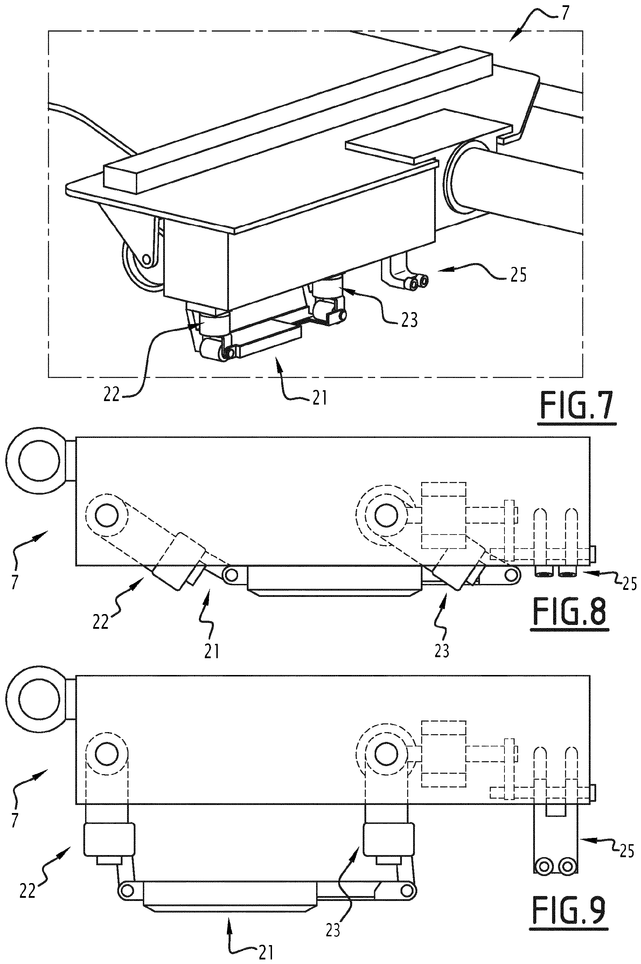

Cependant et comme cela est illustré sur ces figures et en particulier sur les figures 8 et 9, on peut constater que ces moyens en forme de crochet 25 et ces moyens de guidage 21 sont escamotables, pour libérer l'organe en forme de barre de saisie et de sécurisation 7, du rail 20.

En position escamotée de ces moyens de guidage et en forme de crochet d'ancrage, comme illustré par exemple sur la figure 8, l'organe 7 en forme de barre de saisie et de sécurisation du train d'atterrissage principal de l'aéronef, est donc complètement libre vis-à-vis de la plateforme.

Il peut alors être déplacé librement sur la plateforme, par les opérateurs.

On conçoit alors que lorsque le personnel de la zone aviation de la plateforme souhaite manoeuvrer un aéronef posé sur la zone d'appontage/décollage, quel que soit l'endroit où celui-ci est posé, il est possible à ces opérateurs, de déplacer cet organe 7 en forme de barre de saisie et de sécurisation et de le mettre en position de saisie sur les pneumatiques du train principal d'atterrissage de l'aéronef.

Une fois cet organe 7 en forme de barre de saisie et de sécurisation en position d'accrochage des pneumatiques du train de l'aéronef, les opérateurs peuvent alors saisir les câbles 14 et 15 afin d'accrocher leurs extrémités correspondantes sur les moyens d'accrochage complémentaires 12 et 13 prévus aux extrémités de cet organe 7 en forme de barre de saisie.

Les moyens de manoeuvre et de mise sous tension 16 et 17 de ces câbles, sont alors pilotés pour sécuriser les déplacements de l'aéronef sur la plateforme.

Les opérateurs peuvent alors déplacer l'aéronef et l'organe en forme de barre de saisie, jusqu'à un endroit dans lequel l'organe en forme de barre de saisie est en regard du ou des rails de guidage correspondants de la plateforme.

Plus particulièrement, les opérateurs déplacent l'aéronef 3 et l'organe 7 en forme de barre de saisie de celui-ci, jusqu'au moment où les moyens de guidage 21 et les moyens en forme de crochet d'ancrage 25 de cet organe 7, sont en regard du ou des rails et notamment du rail 20.

Dans cette position, les opérateurs peuvent alors déplacer ces moyens de guidage 21 et en forme de crochet 25, de leur position escamotée, illustrée sur la figure 8 par exemple, de déplacement de l'organe 7 en forme de barre, vers leur position active d'ancrage, illustrée par exemple sur la figure 6, par l'intermédiaire de moyens de manoeuvre.

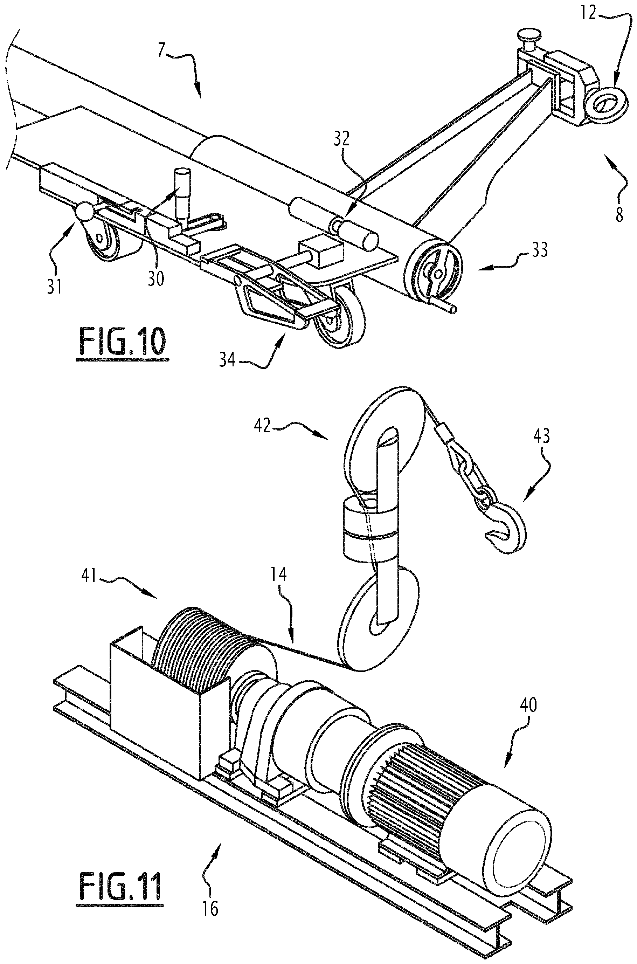

Ces moyens de manoeuvre sont par exemple constitués par un levier ou une manivelle de commande de ces moyens de guidage et d'ancrage, désigné par la référence générale 30 sur la figure 10.

Cette manivelle de commande 30 est par exemple associée à une poignée de verrouillage de ces moyens en position active, désignée par la référence générale 31 sur cette figure 10.

Bien entendu, des moyens d'indication visuelle tels que désignés par la référence générale 32 sur cette figure 10, peuvent être associés à ces moyens, et être déplaçables entre différentes positions pour indiquer visuellement aux opérateurs, la position active ou escamotée et verrouillée ou non, des moyens de guidage 21 et en forme de crochet d'ancrage 25 de l'organe 7.

Bien entendu d'autres formes de réalisation de ces différents moyens peuvent être envisagées.

Comme cela est également illustré sur cette figure 10, différentes fonctions complémentaires peuvent être prévues sur l'organe en forme de barre de saisie et de sécurisation.

Ainsi par exemple, il est possible de prévoir des moyens permettant de régler l'écartement des extrémités de cet organe, afin d'adapter cet écartement et donc l'organe de saisie, à la configuration de l'aéronef.

Le système doit en effet pouvoir être adapté pour manoeuvrer différents types et tailles d'aéronefs.

Ces moyens de réglage sont constitués par exemple par une manivelle désignée par la référence générale 33 sur cette figure 10.

Une pédale de freinage de l'organe, désignée par la référence générale 34, peut également être prévue.

Bien entendu, d'autres fonctions encore peuvent être envisagées.

On a illustré sur la figure 11, un exemple de réalisation possible de moyens de manœuvre et de mise sous tension de cet organe en forme de barre de saisie et de sécurisation.

De tels moyens de manoeuvre et de mise sous tension s'étendent par exemple de façon symétrique de part et d'autre de l'axe longitudinal de la plateforme et de la zone d'appontage comme illustré sur les figures 2 et 3.

Sur la figure 11, on a par exemple illustré la réalisation des moyens désignés par la référence générale 16.

En fait, ces moyens 16 comprennent par exemple un motoréducteur électrique désigné par la référence générale 40, associé un tambour 41 d'enroulement/déroulement d'un câble, comme par exemple le câble désigné par exemple par la référence générale 14 sur ces figures.

Ce câble 14 est alors par exemple associé à un mécanisme, désigné par la référence générale 42, à poulies de renvoi de ce câble 14 vers la zone d'appontage/décollage.

A son extrémité libre correspondante, ce câble 14 comporte des moyens d'accrochage 43 destinés à coopérer avec les moyens d'accrochage complémentaires par exemple 12 et 13 de l'organe 7 en forme de barre de saisie.

Des moyens classiques de commande du motoréducteur permettent de piloter son alimentation pour sécuriser les déplacements de l'aéronef.

On conçoit alors que l'utilisation de ce système est la suivante.

Lorsqu'un aéronef 3 est posé sur la zone d'appontage/décollage 2, et qu'il convient de le déplacer par exemple vers le hangar 4 de stockage de la plateforme 1, les opérateurs de la zone aviation de la plateforme se servent de l'organe 7 en forme de barre de saisie et de sécurisation.

Les moyens de guidage 21 et d'ancrage 25 de cet organe 7 sont alors placés en position escamotée de sorte que l'organe 7 est libre de se déplacer sur la zone et la plateforme.

Les opérateurs déplacent cet organe 7 sur la zone d'appontage/décollage 2, ce qui leur permet d'amener cet organe 7 en contact avec le train d'atterrissage de l'aéronef 3, quelle que soit la position de celui-ci sur la zone d'appontage/décollage de la plateforme.

Les opérateurs accouplent l'organe 7 de saisie et de sécurisation aux pneumatiques du train d'atterrissage de l'aéronef 3.

Ensuite, ils accrochent les extrémités correspondantes des câbles 14 et 15 aux extrémités de cet organe 7 en forme de barre de saisie et de sécurisation et plus particulièrement aux moyens d'accrochage 12 et 13 de celui-ci.

Les opérateurs peuvent également utiliser les moyens de manutention motorisés 6 associés par exemple au train auxiliaire d'atterrissage de l'aéronef 3, pour déplacer cet aéronef.

Durant ce déplacement de l'aéronef, les moyens de manœuvre et de mise sous tension 16 et 17 sont pilotés pour assurer la sécurisation du déplacement de l'aéronef, c'est-à-dire pour empêcher que celui-ci en particulier dérape ou bascule sur la zone d'appontage/décollage.

Ce déplacement de l'aéronef se poursuit jusqu'au moment où l'organe 7 en forme de barre de saisie et de sécurisation et plus particulièrement les moyens de guidage 21 et en forme de crochet d'ancrage 25 de celui-ci, se trouvent en regard des rails de guidage complémentaires par exemple 20, ménagés dans la plateforme.

Une fois dans cette position, les opérateurs manoeuvrent les moyens de commande 30 de ces moyens de guidage et en forme de crochet d'ancrage de l'organe de saisie 7, pour les déplacer de leur position escamotée vers leur position active dans les rails.

Les opérateurs actionnent ensuite les moyens de verrouillage 31 de ces moyens de guidage et d'ancrage en position active.

Une fois dans cette position, ces moyens de guidage et d'ancrage permettent d'assurer la sécurisation des déplacements de l'aéronef sur la plateforme pour le reste de la manœuvre de celui-ci, entre la zone et le hangar, car l'organe de saisie et de sécurisation est en position d'accrochage dans le ou les rails de la plateforme.

Ainsi et grâce aux câbles et aux moyens de mise sous tension de ceux-ci, la sécurité de l'aéronef, de la plateforme et du personnel est assurée même lorsque l'organe de saisie n'est pas verrouillé dans les rails.

Bien entendu d'autres modes de réalisation encore peuvent être envisagés.

## Revendications

1. Plateforme navale (1) équipée d'une zone d'appontage/décollage (2) d'au moins un aéronef (3) et de moyens de manutention de cet aéronef pour le déplacer sur cette zone d'appontage/décollage, où les moyens de manutention comprennent en outre un organe (7) en forme de barre de saisie et de sécurisation du train d'atterrissage principal de l'aéronef (3) muni de moyens (25) en forme de crochet d'ancrage montés déplaçables à coulissement dans au moins un rail (20) de guidage de ses déplacements et donc de l'aéronef (3) sur la zone d'appontage/décollage (2) et où les moyens en forme de crochet (25) sont escamotables pour permettre de libérer l'organe (7) en forme de barre de saisie et de sécurisation, du rail (20), placer cet organe (7) en position de saisie du train d'atterrissage de l'aéronef (3), déplacer l'aéronef (3) de manière à amener l'organe (7) en forme de barre de saisie et de sécurisation en position sur ledit au moins un rail (20) et les moyens en forme de crochet (25) en regard de ce rail et remettre ces moyens en forme de crochet (25) en position d'ancrage dans ledit au moins un rail (20) pour sécuriser l'aéronef.

2. Plateforme navale selon la revendication 1, **caractérisée en ce que** les moyens en forme de crochet (25) sont montés déplaçables entre des positions active d'ancrage et escamotée de déplacement de l'organe (7) en forme de barre, par l'intermédiaire de moyens de manœuvre (30) manipulables par un opérateur.

3. Plateforme navale selon la revendication 2, **caractérisée en ce que** les moyens de manœuvre comprennent un levier (30) déplaçable par un opérateur et sont associés à des moyens (32) d'indication visuelle de la position active ou escamotée des moyens en forme de crochet d'ancrage (25).

4. Plateforme navale selon l'une quelconque des revendications précédentes, **caractérisée en ce que** les extrémités de l'organe (7) en forme de barre de saisie et de sécurisation comprennent des moyens (12, 13) d'accrochage de premières extrémités de câbles de sécurisation (14, 15) dont les secondes extrémités sont associées à des moyens de manœuvre (16, 17) pour déplacer et sécuriser l'aéronef (3) sur la plateforme (1).

5. Plateforme navale selon la revendication 4, **caractérisée en ce que** les moyens de manœuvre (16, 17) comprennent chacun un motoréducteur (40) associé à un tambour d'enroulement/déroulement (41) du câble (14, 15) et à des poulies de renvoi (42) du câble.

6. Plateforme navale selon l'une quelconque des revendications 4 ou 5, **caractérisée en ce qu'**elle comporte des moyens de manœuvre (16, 17) disposés symétriquement de part et d'autre de la zone d'appontage/décollage (2).

7. Plateforme navale selon l'une quelconque des revendications précédentes, **caractérisée en ce que** la plateforme navale comporte une grille d'harponnage (5) pour l'aéronef (3) dans la zone d'appontage/décollage (2) et un hangar (4) de stockage de cet aéronef.

8. Plateforme navale selon la revendication 7, **caractérisée en ce que** les moyens de manœuvre sont placés entre la zone d'appontage/décollage (2) et le hangar (4) pour sécuriser les déplacements de l'aéronef entre la zone d'appontage/décollage et ledit au moins un rail.

9. Plateforme navale selon l'une quelconque des revendications précédentes, **caractérisée en ce que** les moyens de manutention comprennent un chariot motorisé (6) de saisie du train d'atterrissage auxiliaire de l'aéronef (3) pour déplacer celui-ci.

10. Plateforme navale selon l'une quelconque des revendications précédentes, **caractérisée en ce qu'**elle comporte deux rails de guidage parallèles.

## Patentansprüche

1. Schiffsplattform (1), die mit einer Lande-/Startzone (2) mindestens eines Luftfahrzeuges (3) und Mitteln zum Transport dieses Luftfahrzeugs, um es auf dieser Lande-/Startzone zu bewegen, ausgerüstet ist, wobei die Transportmittel außerdem ein Element (7) in Form einer Stange zum Greifen und Sichern des Hauptfahrwerks des Luftfahrzeuges (3) umfassen, das mit Mitteln (25) in Form eines Verankerungshakens ausgerüstet ist, die verschiebbar in mindestens einer Schiene (20) zur Führung ihrer Bewegungen und somit des Luftfahrzeugs (3) auf der Lande-/Startzone (2) montiert sind, und wobei die Mittel (25) in Form eines Hakens einziehbar sind, um zu ermöglichen, dass das Element (7) in Form einer Stange zum Greifen und Sichern von der Schiene (20) freigesetzt wird, dieses Element (7) in die Position des Greifens des Fahrwerks des Luftfahrzeugs (3) gebracht wird, das Luftfahrzeug (3) so verschoben wird, dass das Element (7) in Form einer Stange zum Greifen und Sichern in Position auf der mindestens einen Schiene (20) und die Mittel (25) in Form eines Hakens gegenüberliegend zu dieser Schiene gebracht werden und diese Mittel (25) in Form eines Hakens in die Position der Verankerung in der mindestens einen Schiene (20) zum Festlegen des Luftfahrzeuges zurückgeführt werden.

2. Schiffsplattform nach Anspruch 1, **dadurch gekennzeichnet, dass** die Mittel (25) in Form eines Hakens bewegbar zwischen einer aktiven Position der Verankerung und einer eingezogenen Position der Bewegung des Elements (7) in Form einer Stange mittels Handhabungsmitteln (30), die von einer Bedienperson betätigbar sind, montiert sind.

3. Schiffsplattform nach Anspruch 2, **dadurch gekennzeichnet, dass** die Handhabungsmittel einen von einer Bedienperson bewegbaren Hebel (30) umfassen, und die Mitteln (32) zur visuellen Angabe der aktiven oder eingezogenen Position der Mittel (25) in Form eines Verankerungshakens zugeordnet sind.

4. Schiffsplattform nach einem beliebigen der vorhergehenden Ansprüche, **dadurch gekennzeichnet, dass** die Enden des Elementes (7) in Form einer Stange zum Greifen und Sichern Mittel (12, 13) zum Einhängen von ersten Enden von Sicherungskabeln umfassen, deren zweite Enden Handhabungsmitteln (16, 17) zugeordnet sind, um das Luftfahrzeug (3) auf der Plattform (1) zu bewegen und festzulegen.

5. Schiffsplattform nach Anspruch 4, **dadurch gekennzeichnet, dass** die Handhabungsmittel (16, 17) jeweils einen Getriebemotor (40) umfassen, der einer Trommel (41) zum Aufwickeln/Abwickeln des Kabels (14, 15) und Umlenkrollen (42) des Kabels zugeordnet ist.

6. Schiffsplattform nach einem beliebigen der Ansprüche 4 oder 5, **dadurch gekennzeichnet, dass** sie Handhabungsmittel (16, 17) aufweist, die symmetrisch beidseitig der Lande-/Startzone (2) angeordnet sind.

7. Schiffsplattform nach einem beliebigen der vorhergehenden Ansprüche, **dadurch gekennzeichnet, dass** die Schiffsplattform ein Harpuniergitter (5) für das Luftfahrzeug (3) in der Lande-/Startzone (2) und einen Hangar zur Lagerung dieses Luftfahrzeugs aufweist.

8. Schiffsplattform nach Anspruch 7, **dadurch gekennzeichnet, dass** die Handhabungsmittel zwischen der Lande-/Startzone (2) und dem Hangar (4) angeordnet sind, um die Bewegungen des Luftfahrzeugs zwischen der Lande-/Startzone und der mindestens einen Schiene zu sichern.

9. Schiffsplattform nach einem beliebigen der vorhergehenden Ansprüche, **dadurch gekennzeichnet, dass** die Transportmittel einen motorisierten Wagen (6) zum Greifen des Hilfsfahrwerks des Luftfahrzeugs (3) für dessen Bewegung umfassen.

10. Schiffsplattform nach einem beliebigen der vorhergehenden Ansprüche, **dadurch gekennzeichnet, dass** sie zwei parallele Führungsschienen aufweist.

## Claims

1. A naval platform (1) equipped with a deck landing/takeoff zone (2) for at least one aircraft (3) and means for handling said aircraft, for moving it over said deck landing/takeoff zone, the handling means further comprising a member (7) in the form of a bar for gripping and securing the main landing gear of the aircraft (3), provided with means (25) in the form of an anchoring hook mounted such that they can slide in at least one rail (20) for guiding the movements thereof, and therefore of the aircraft (3), on the deck landing/takeoff zone (2), and the means in the form of a hook (25) being retractable so as to allow the release of the member (7) in the form of a gripping and securing bar from the rail (20), the positioning of said member (7) such that it grips the landing gear of the aircraft (3), the movement of the aircraft (3) so as to bring the member (7) in the form of a gripping and securing bar into position on said at least one rail (20) and the means in the form of a hook (25) into a position in which they face said rail, and the movement of said means in the form of a hook (25) back into an anchoring position in said at least one rail (20) in order to secure the aircraft.

2. The naval platform according to claim 1, **characterized in that** the means in the form of a hook (25) are mounted so as to be movable between an active anchoring position and a retracted position for movement of the member (7) in bar form, via maneuvering means (30) able to be manipulated by an operator.

3. The naval platform according to claim 2, **characterized in that** the maneuvering means comprise a lever (30) able to be moved by an operator and are associated with visual means (32) for indicating the active or retracted position of the means in the form of an anchoring hook (25).

4. The naval platform according to any one of the preceding claims, **characterized in that** the ends of the member (7) forming a gripping and securing bar comprise means (12, 13) for attaching first ends of securing cables (14, 15), the second ends of which are associated with maneuvering means (16, 17) for moving and securing the aircraft (3) on the platform (1).

5. The naval platform according to claim 4, **characterized in that** the maneuvering means (16, 17) each comprise a gear motor (40) associated with a drum (41) for winding/unwinding the cable (14, 15) and return pulleys (42) for the cable.

6. The naval platform according to any one of claims 4 or 5, **characterized in that** it includes maneuvering means (16, 17) arranged symmetrically on either side of the deck landing/takeoff zone (2).

7. The naval platform according to any one of the preceding claims, **characterized in that** the naval platform includes a harpoon grate (5) for the aircraft (3) in the deck landing/takeoff zone (2) and a storage hangar (4) for said aircraft.

8. The naval platform according to claim 7, **characterized in that** the maneuvering means are placed between the deck landing/takeoff zone (2) and the hangar (4) to secure the movements of the aircraft between the deck landing/takeoff zone and said at least one rail.

9. The naval platform according to any one of the preceding claims, **characterized in that** the handling means comprise a motorized truck (6) for gripping the auxiliary landing gear of the aircraft (3) to move the latter.

10. The naval platform according to any one of the preceding claims, **characterized in that** it includes two parallel guide rails.
